# FASCICULE DE BREVET EUROPEEN

(11) **EP 0 970 600 B1**
(45) Date de publication et mention de la délivrance du brevet: **20.11.2002**
(21) Numéro de dépôt: 99401723.4
(22) Date de dépôt: 08.07.1999
(51) Int. Cl.: A01F 29/00, A01F 29/14, A01K 5/00

(54) **Machine distributrice de produit du genre fourrage et autres pour l'alimentation du bétail**
Verteilungsmaschine für Viehfutter und ähnliches
Distributor for forage and similar animal feedstuff

(30) Priorité: 10.07.1998 FR 9809014; 10.07.1998 FR 9809015
(43) Date de publication de la demande: 12.01.2000
(73) Titulaire: LUCAS G, 85130 La Verrie (FR)
(72) Inventeur: Lucas, Gérard, 85130 La Verrie (FR)
(74) Mandataire: Michelet, Alain

(56) Documents cités:
- EP-A- 0 384 791
- FR-A- 2 727 821
- FR-A- 2 735 652
- FR-A- 2 737 386
- US-A- 4 496 105

## Description

La présente invention concerne une machine qui permet notamment d'assurer la distribution de produit du genre fourrage et autres, pour l'alimentation du bétail.

Ces machines peuvent également comporter d'autres fonctions comme par exemple une fonction de chargement, ainsi qu'une fonction de mélange des aliments à l'intérieur de la benne.

Le maniement de ces machines, surtout lors de l'opération de distribution, requiert de la part de l'opérateur, une grande attention et une certaine dextérité.

En effet, selon la nature et l'état des produits à distribuer, des difficultés liées au phénomène de bourrage peuvent surgir et causer une certaine perturbation dans le fonctionnement de la machine. Ces perturbations contrarient le bon déroulement de l'opération de distribution et peuvent également causer des dommages à la machine et en particulier à ses différents mécanismes de transmission.

Ce type de machine, décrit notamment dans le document EP-0 384 491, est équipé d'un dispositif éjecteur du genre ventilateur ou tapis, alimenté par un dispositif démêleur-déchiqueteur qui est constitué d'au moins un rotor, lequel dispositif démêleur-déchiqueteur est disposé en amont dudit dispositif éjecteur et à l'extrémité avant de la benne dans laquelle sont disposés les produits à distribuer. Le fond de cette benne est muni d'un dispositif convoyeur du genre tapis à barrettes qui a pour fonction de faire progresser lentement les produits vers le dispositif démêleur-déchiqueteur. Le dispositif convoyeur est généralement entraîné au moyen d'un moteur hydraulique à vitesse contrôlée par le biais d'un bloc hydraulique proportionnel. Le ventilateur et le dispositif démêleur-déchiqueteur sont entraînés à partir d'un boîtier mécanique qui est relié à la prise de force du tracteur, comme décrit par exemple dans le document FR-2 735 652.

Pour faciliter le travail de l'opérateur, il a été prévu dans le document FR-2 727 821 de la demanderesse, d'associer à cette machine un système de commande globalisée comprenant un boîtier électronique muni d'un programme de fonctionnement adapté à la machine, et un ensemble de moyens de commande hydraulique, du genre valves, rassemblés dans un boîtier. Le boîtier électronique est mis en oeuvre par l'opérateur avec visualisation des différentes fonctions sur un tableau.

Les différents moyens proposés par l'invention permettent d'améliorer le fonctionnement de ce type de machine et surtout d'améliorer la sécurité d'une manière générale aussi bien pour l'opérateur que toute personne susceptible d'approcher et/ou d'intervenir sur cette machine.

Ce type de machine, équipée d'un système de commande de ses différents organes tels que décrits dans le document FR-2 727 821 précité, est équipée, selon la revendication 1, d'un mécanisme d'embrayage interposé dans la transmission de mouvement disposée entre le boîtier mécanique et le dispositif démêleur-déchiqueteur.

Ce mécanisme d'embrayage du type électromagnétique permet à l'opérateur de différer la mise en service du dispositif démêleur-déchiqueteur par rapport à la mise en oeuvre du dispositif éjecteur constitué par exemple d'un ventilateur de grand diamètre.

Cette possibilité permet à l'opérateur de mettre tout d'abord en service le ventilateur, en le réglant à sa vitesse nominale d'éjection et/ou de distribution, puis de mettre en service le dispositif démêleur-déchiqueteur, ce qui permet de démarrer ce dernier en douceur.

Toujours selon l'invention, le système de commande comprend des moyens qui permettent de différer la mise en service du dispositif convoyeur c'est-à-dire du tapis d'amenée des produits, par rapport à la mise en service du dispositif démêleur-déchiqueteur. Ce retard est de l'ordre de une à quelques secondes, et il permet de lancer le ou les rotors du dispositif démêleur-déchiqueteur et de les mettre à une vitesse de rotation qui correspond à leur vitesse nominale.

Là aussi, cette disposition constructive permet un démarrage en douceur et elle permet d'éviter les risques de bourrage.

A l'inverse et toujours selon l'invention, l'arrêt du dispositif démêleur-déchiqueteur s'effectue de façon séquentielle avec tout d'abord la commande d'arrêt du dispositif convoyeur puis, avec un décalage d'une seconde par exemple la commande de mise hors service de l'embrayage pour permettre l'arrêt différé dudit dispositif démêleur-déchiqueteur.

La présence de l'embrayage et la commande séquentielle des dispositifs démêleur-déchiqueteur et convoyeur permettent de supprimer les risques de bourrage.

L'embrayage et cette commande permettent aussi d'arrêter de façon quasi instantanée la distribution d'aliments sans être obligé d'arrêter le dispositif éjecteur qui, dans le cas d'un ventilateur, présente une certaine inertie.

Toujours selon l'invention, la machine comporte un capteur qui permet de détecter la rotation du dispositif éjecteur, lequel capteur par l'intermédiaire du système de commande, autorise la mise en service du mécanisme d'embrayage c'est-à-dire la mise en service du dispositif démêleur-déchiqueteur lorsque le dispositif éjecteur est lui-même en service, et l'interdit dans le cas contraire.

Pour faciliter la conduite de la machine, la vitesse de rotation du dispositif éjecteur est contrôlée en permanence au moyen d'un capteur de vitesse, lequel capteur transmet ses informations au système de commande, et en particulier au boîtier électronique de commande, lequel, en fonction des variations et de l'importance de ces variations de vitesses qui peuvent aller jusqu'à l'arrêt en cas de bourrage, corrige et adapte la vitesse d'avancement du dispositif convoyeur en agissant sur le bloc hydraulique proportionnel qui alimente le moteur hydraulique d'entraînement dudit dispositif convoyeur.

La machine selon l'invention comporte également un capteur de vitesse de rotation situé au niveau du dispositif démêleur-déchiqueteur, lequel capteur est relié au boîtier de commande électronique pour désactiver ledit mécanisme d'embrayage lorsque notamment, les variations de vitesses détectées par le capteur du dispositif démêleur-déchiqueteur ou par le capteur du dispositif éjecteur sont très importantes suite par exemple à un bourrage.

Selon une autre disposition de l'invention, la machine peut comporter directement ou par le biais du tracteur, des moyens qui permettent d'établir sa vitesse d'avancement. Ces moyens peuvent être associés à des moyens de pesage en continu du poids de la benne et permettre ainsi d'établir, en liaison avec le système de commande électronique, un débit à l'éjection qui est proportionnel à l'avancement et par voie de conséquence, offrir une nouvelle possibilité à l'opérateur de distribuer et de répartir équitablement une certaine quantité de produit.

Selon une autre disposition de l'invention, toujours dans un souci de sécurité, la machine comporte au moins un capteur de détection de la position des organes de fermeture de la benne c'est-à-dire de la position de la porte de chargement de ladite benne, lequel capteur permet, toujours sous le contrôle du système de commande, d'interdire la mise en service du dispositif démêleur-déchiqueteur et éventuellement celle du dispositif convoyeur, lorsque la porte d'obturation de la benne est ouverte.

L'invention sera encore détaillée à l'aide de la description suivante en liaison avec les dessins annexés donnés à titre indicatif, et dans lesquels :

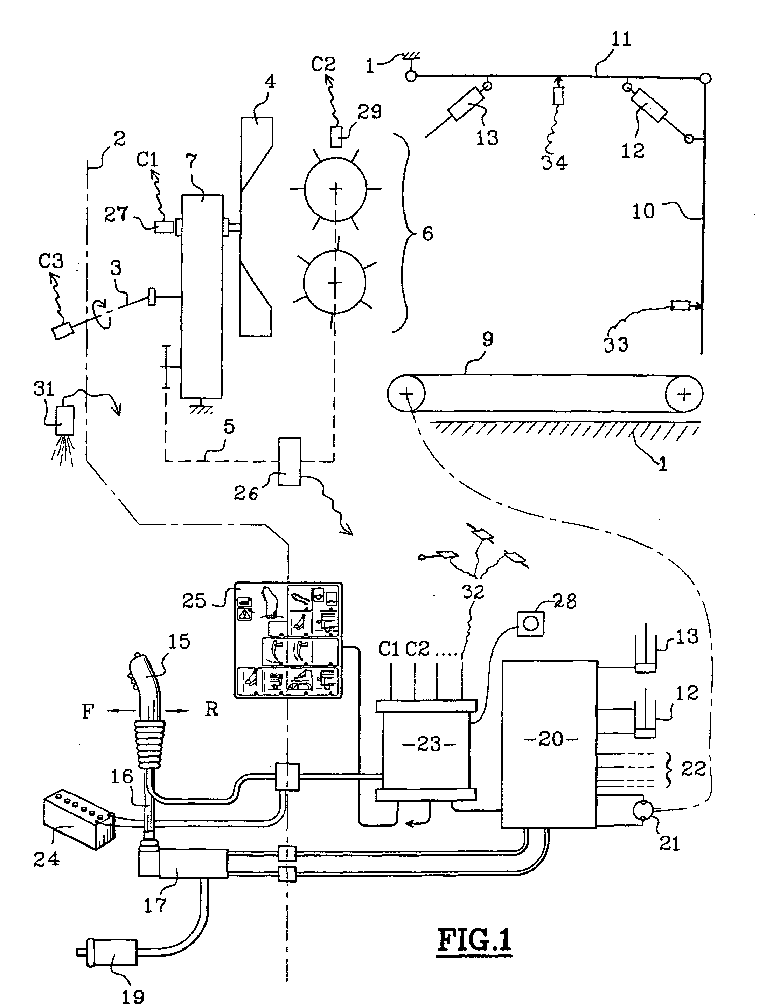

- les figures 1 et 2 représentent, schématiquement, les organes essentiels d'une machine distributrice selon l'invention à laquelle est associé un système de commande des différents organes ;
- la figure 3 illustre les entrées et sorties du boîtier électronique de commande.

Les organes essentiels de la machine sont schématisés, montés sur un châssis 1 qui constitue en même temps la benne. Cette benne, généralement munie de roues non représentées, est tirée par un tracteur non représenté, lequel tracteur se situe en avant du trait mixte fin 2 qui indique la séparation entre les organes de la machine et ceux du tracteur.

Le tracteur entraîne, au moyen de sa prise de force 3, un dispositif d'éjection 4 constitué par exemple d'un ventilateur de grand diamètre disposé à l'avant de la benne. Il entraîne également, par l'intermédiaire d'une transmission 5 représentée sous forme d'un trait mixte fin, un dispositif démêleur-déchiqueteur 6 qui comprend au moins un rotor muni de dents appropriées pour découper et déchiqueter les produits disposés dans la benne.

La transmission de mouvement entre la prise de force 3 et le dispositif éjecteur 4 d'une part, et le dispositif démêleur-déchiqueteur 6 d'autre part, s'effectue au moyen d'un boîtier mécanique 7 comme par exemple le boîtier décrit dans le document FR-2 735 652.

Le fond de la benne comporte, en amont du dispositif démêleur-déchiqueteur 6, un dispositif convoyeur 9 qui permet de faire progresser les produits à une vitesse appropriée, vers ledit dispositif dêmêleur-déchiqueteur. L'extrémité arrière de la benne comporte une porte 10 portée par un bras 11 qui est lui-même articulé sur le châssis 1 constituant la benne. Cette porte 10 peut également faire office de pelle de chargement et elle est mobile sous l'effet d'un premier vérin 12 qui est monté sur le bras 11, lequel bras 11 est lui-même mobile par l'intermédiaire d'un vérin 13 partiellement représenté, et qui est monté sur le châssis 1.

L'opérateur, qui généralement se situe sur le tracteur, dispose d'un organe de manoeuvre 15 en forme de poignée multifonctions; cette poignée est associée au levier 16 qui permet de manipuler un distributeur hydraulique 17 disposé sur le tracteur. Le distributeur hydraulique 17 est interposé entre la pompe 19 du tracteur et les différentes valves de distribution rassemblées dans un bloc hydraulique 20 disposé sur la machine, lesquelles valves permettent d'alimenter les vérins hydrauliques 12, 13 par exemple, le moteur hydraulique 21 qui permet d'entraîner le dispositif convoyeur 9 et d'autres organes repérés 22, disposés sur la machine.

Le bloc 20 qui rassemble les différentes électrovannes de manoeuvre des vérins, moteurs et autres, est relié au boîtier électronique de commande 23, lequel boîtier électronique est relié électriquement à la poignée 15 et il reçoit des ordres par le biais de boutons interrupteurs disposés sur cette poignée, et manoeuvrés par l'opérateur.

L'alimentation électrique du boîtier électronique s'effectue par exemple à partir de la batterie 24 du tracteur.

Le boîtier électronique 23 est également relié à un tableau synoptique 25 disposé de préférence sur la machine mais visible depuis le tracteur pour permettre à l'opérateur de suivre les différentes opérations effectuées avec la machine.

La mise en service du dispositif éjecteur 4 s'effectue depuis le tracteur par la mise en service de la prise de force 3. La transmission 5 disposée entre le boîtier 7 et le dispositif déméleur-déchiqueteur 6 comporte un mécanisme d'embrayage 26 qui permet de différer le démarrage des rotors du dispositif démêleur-déchiqueteur par rapport au démarrage du dispositif éjecteur 4.

Ce mécanisme d'embrayage 26 est de préférence constitué d'un embrayage électromagnétique qui est relié électriquement au boîtier électronique de commande 23, lequel boîtier contrôle sa mise en service.

Cette mise en service du mécanisme d'embrayage 26 peut être effectuée à partir d'un bouton interrupteur approprié disposé sur la machine ou sur la poignée 15. L'opérateur peut ainsi intervenir lui-même directement pour, dans un premier temps, lancer et mettre en service le dispositif éjecteur 4 et ensuite mettre en service le dispositif démêleur-déchiqueteur 6 par activation du mécanisme d'embrayage 26.

Cette possibilité de différer et d'intervenir sur la mise en service du dispositif démêleur-déchiqueteur 6 par rapport à la mise en service du dispositif éjecteur 4, permet d'éviter les pics d'absorption de puissance sur la prise de force 3. Cette possibilité d'intervention permet également de stopper l'alimentation du dispositif éjecteur 4 à tout moment lors de la distribution, comme par exemple lors des manoeuvres de la benne, sans avoir à l'arrêter.

Le dispositif éjecteur 4 peut être associé à un capteur 27 qui permet de contrôler sa rotation. Ce capteur 27 est relié au boîtier électronique de commande 23 pour permettre le contrôle de la mise en service du mécanisme d'embrayage 26 afin d'éviter par exemple la mise en service du dispositif démêleur-déchiqueteur 6 lorsque le dispositif éjecteur 4 ne fonctionne pas.

Le boîtier électronique de commande 23 permet également de contrôler et d'intervenir au niveau de la mise en service du dispositif convoyeur 9.

Un système de temporisation 28, intégré au boîtier électronique de commande 23, permet de différer le démarrage du dispositif convoyeur 9 par rapport au lancement des rotors du dispositif démêleur-déchiqueteur 6.

On évite de cette façon les risques de bourrage, une trop grande absorption de puissance au niveau du dispositif démêleur-déchiqueteur 6 lors de son démarrage.

En cas de demande d'arrêt du dispositif démêleur-déchiqueteur 6, l'ordre transite par le boîtier électronique 23 qui, d'une façon séquentielle, commence par arrêter le dispositif convoyeur 9 puis, grâce au dispositif de temporisation 28, diffère l'arrêt dudit dispositif démêleur-déchiqueteur 6 en mettant hors service le mécanisme d'embrayage 26.

Cette gestion du couple démêleur-déchiqueteur 6 et convoyeur 9 supprime les risques de bourrage et permet d'arrêter plus facilement la distribution d'aliments sans avoir à arrêter le dispositif d'éjection 4.

Le dispositif de temporisation 28, intégré au boîtier électronique de commande 23, établit une temporisation fixe ou réglable de l'ordre de une à quelques secondes.

Le boîtier électronique 23 renferme un programme de fonctionnement adapté au type de machine et aux moyens qui permettent de contrôler et d'analyser l'état des différents organes de ladite machine et d'intervenir en fonction du programme préétabli.

Ainsi, pour le dispositif éjecteur 4, le capteur C1 repéré 27, permet de contrôler en permanence la vitesse de rotation dudit dispositif éjecteur.

Ce capteur C1 est relié au boîtier électronique 23, lequel boîtier électronique peut mémoriser une vitesse de rotation nominale du dispositif éjecteur, adaptée au mode de distribution.

Partant de cette vitesse nominale, le boîtier électronique peut calculer et analyser les variations de vitesse et, en fonction de ces variations, modifier et adapter la vitesse d'avancement du dispositif convoyeur 9 en intervenant sur l'alimentation du moteur hydraulique 21. Ce moteur hydraulique 21 peut être alimenté par le biais d'un bloc hydraulique proportionnel disposé dans le bloc de distribution 20 par exemple.

De la même façon, le boîtier électronique permet de surveiller et contrôler la vitesse de rotation des rotors du dispositif démêleur-déchiqueteur 6. Un capteur 29 relié au boîtier électronique apporte les informations de vitesse des rotors. Comme précédemment avec le dispositif éjecteur, les variations de vitesse des rotors du dispositif démêleur-déchiqueteur 6 peuvent conduire le boîtier électronique 23 à ajuster la vitesse du dispositif convoyeur 9 afin d'éviter les phénomènes de bourrage.

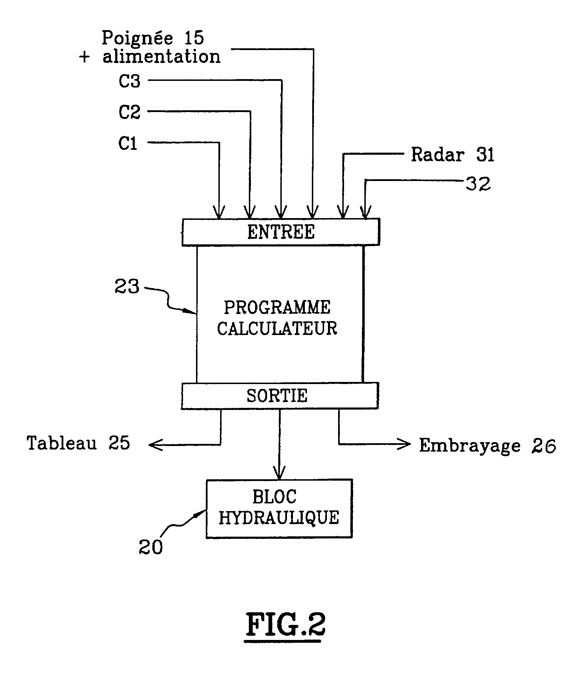

Comme représenté sur la figure 2, les capteurs C1 et C2 sont reliés à l'entrée du boîtier électronique 23. Cette entrée reçoit également l'alimentation électrique provenant de la batterie 24 et elle est connectée à la poignée de commande générale 15 située sur le tracteur.

La transmission de mouvement entre le boîtier 7 et le dispositif démêleur-déchiqueteur 6 se fait par le mécanisme d'embrayage 26 qui est mis en oeuvre à travers le boîtier électronique de commande 23 soit automatiquement en fonction des informations du capteur 29, soit à partir des ordres provenant par exemple de la poignée de commande 15 disposée sur le tracteur.

Le boîtier électronique 23 comporte, comme représenté figure 2, une sortie à partir de laquelle s'effectuent l'alimentation du mécanisme d'embrayage 26, l'alimentation des électrovalves et autres du bloc hydraulique 20 et l'alimentation du tableau 25 qui affiche les différentes fonctions de la machine.

La machine peut également comporter directement ou, comme représenté sur les figures, bénéficier des informations provenant d'un radar 31 disposé sur le tracteur, lequel radar permet d'apporter des informations sur la vitesse d'avancement de la machine, lesquelles informations peuvent être traitées par le boîtier électronique 23 afin d'ajuster le débit du dispositif éjecteur 4, le tout combiné soit avec la vitesse d'avancement du dispositif convoyeur 9, soit avec des informations provenant de capteurs 32 qui mesurent en permanence le poids de la benne et de son contenu et les variations de poids. Ces capteurs 32 sont par exemple disposés sur le ou les essieux et le système d'attelage. Les informations des capteurs sont amenées au boîtier électronique 23 qui gère le tout avec son programme et son horloge.

Le tracteur peut également apporter directement au boîtier électronique 23 des informations sur la vitesse de rotation de la prise de force 3 au moyen d'un capteur de vitesse C3.

Le tracteur peut aussi recevoir, si son équipement le lui permet, des informations et/ou ordres provenant du boîtier électronique 23 comme par exemple un ordre de mise hors service de la prise de force.

Toujours au chapitre sécurité, la porte arrière 10 de la benne peut mettre en oeuvre un capteur de position 33. Ce capteur 33, relié au boîtier électronique de commande 23 peut, par l'intermédiaire de ce dernier, autoriser ou interdire le fonctionnement du dispositif démêleur-déchiqueteur 6 et du dispositif convoyeur 9. De la même façon, un capteur 34 peut être associé au bras 11 pour détecter la position de ce dernier. Ce capteur 34 relié au boîtier électronique de commande 23 peut lui aussi, conditionner la mise en service du dispositif démêleur-déchiqueteur 6 et du dispositif convoyeur 9, et améliorer ainsi la sécurité globale des utilisateurs de ce type de machine.

## Revendications

1. Machine distributrice de produit du genre fourrage ou autre pour l'alimentation du bétail comportant, d'une part, un dispositif éjecteur (4) et un dispositif démêleur-déchiqueteur (6) qui est constitué d'au moins un rotor situé en amont dudit dispositif éjecteur et à l'extrémité avant d'une benne dont le fond est muni d'un dispositif convoyeur (9) chargé de faire progresser les produits vers ledit dispositif démêleur-déchiqueteur (6), lesquels dispositifs éjecteur et démêleur-déchiqueteur sont entraînés en rotation à partir d'un boîtier mécanique (7) relié à la prise de force (3) du tracteur, et, d'autre part, un système de commande comprenant un boîtier électronique (23) interposé entre un organe du genre poignée (15) à disposition de l'opérateur sur le tracteur et un boîtier (20) qui rassemble les différentes électrovannes chargées d'alimenter les organes de la machine, **caractérisée en ce qu'**elle comporte un mécanisme d'embrayage (26) interposé entre le boîtier mécanique (7) et ledit dispositif démêleur-déchiqueteur (6), lequel mécanisme d'embrayage (26) du genre électromagnétique, est mis en oeuvre à travers le boîtier de commande électronique (23).

2. Machine distributrice selon la revendication 1, **caractérisée en ce qu'**elle comporte des moyens de temporisation (28) associés au boîtier électronique de commande (23), qui permettent de différer de une ou quelques secondes la mise en service du dispositif convoyeur (9) par rapport au lancement du ou des rotors du dispositif démêleur-déchiqueteur (6) et/ou l'arrêt de ce dernier par rapport à l'arrêt dudit dispositif convoyeur (9).

3. Machine distributrice selon l'une quelconque des revendications 1 ou 2, **caractérisée en ce qu'**elle comporte au niveau du dispositif d'éjection (4), un capteur (27) chargé de détecter la rotation de ce dernier, lequel capteur relié au boîtier électronique de commande (23), permet d'autoriser ou d'interdire la mise en service du dispositif démêleur-déchiqueteur (6) selon l'état dudit dispositif éjecteur.

4. Machine distributrice selon l'une quelconque des revendications 1 à 3, **caractérisée en ce qu'**elle comprend des moyens de détection de la vitesse de rotation du dispositif éjecteur (4), constitué du capteur (27), lequel capteur (27) est relié au boîtier électronique (23) de façon à permettre à ce dernier, en fonction des variations de vitesse et de leur importance, pouvant aller à l'arrêt brusque de commander, sur la base d'un programme enregistré, d'effectuer une modification de la vitesse d'avancement du dispositif convoyeur (9) afin de conserver pour ledit dispositif éjecteur, une vitesse et un débit appropriés.

5. Machine distributrice selon la revendication 1, **caractérisée en ce que** le mécanisme d'embrayage est commandé à partir du boîtier électronique (23) de façon à pouvoir être désactivé lorsque la vitesse du ou des rotors du dispositif démêleur-déchiqueteur (6) contrôlée par un capteur (29) varie dans des proportions importantes signalant par exemple un bourrage.

6. Machine distributrice selon l'une quelconque des revendications 1 à 5, **caractérisée en ce qu'**elle comporte directement, ou par le biais du tracteur, des moyens d'informations sur sa vitesse d'avancement, lesquels moyens, associés au boîtier électronique (23), permettent de régler en fonction de cette vitesse, de la vitesse du tapis convoyeur (9) et/ou la variation du poids des produits contenus dans la benne, le débit de la machine et de l'adapter au débit souhaité.

7. Machine distributrice selon l'une quelconque des revendications 1 à 6, **caractérisé en ce qu'**elle comporte au moins un capteur de position (33) associé à la porte arrière (10) de la benne, lequel capteur est relié au boîtier électronique de commande (23) pour interdire la mise en service du dispositif démêleur-déchiqueteur (6) et éventuellement du dispositif convoyeur (9) lorsque ladite porte (10) est ouverte.

## Claims

1. A machine for distributing a product such as fodder or other for feeding cattle comprising, on the one hand, an ejecting device (4) and a breaking-shredding device (6) composed of at least one rotor situated upstream of said ejection device and at the front end of a tipper whereof the bottom is fitted with a conveying device (9) intended for moving the products towards said breaking-shredding device (6), which ejecting and breaking-shredding devices are driven into rotation from a mechanical box (7) linked with the power take-off shaft (3) of the tractor, and, on the other hand, a control system comprising an electronic box (23) interposed between a handle-type member (15) available to the operator on the tractor and a box (20) accommodating the different solenoid valves intended for supplying the members of the machine, **characterised in that** it comprises a clutching mechanism (26) interposed between the mechanical box (7) and said breaking-shredding device (6), which electromagnetic-type clutching mechanism (26) is implemented through the electronic control box (23).

2. A distributing machine according to claim 1, **characterised in that** it comprises delay means (28) associated with the electronic control box (23) which enable to delay by one or a few seconds the putting into service of the conveying device (9) with respect to the start of the rotor(s) of the breaking-shredding device (6) and/or the stop of said device with respect to the stop of said conveying device (9).

3. A distributing machine according to any of claims 1 or 2, **characterised in that** it comprises at the ejection device (4), a sensor (27) intended for detecting the rotation of said device, which sensor connected to the electronic control box (23), enables to authorise or prevent the putting into service of the breaking-shredding device (6) according to the condition of said ejection device.

4. A distributing machine according to any of claims 1 to 3, **characterised in that** it comprises means for detecting the rotational speed of the ejection device (4), composed of the sensor (27), which sensor (27) is connected to the electronic box (23) in order to enable said box, in relation to the speed variations and to their magnitudes, which can even cause sudden stop of the control, on the basis of a recorded programme, to modify the forward speed of the conveying device (9) in order to keep for said ejection device, appropriate speed and throughput.

5. A distributing machine according to claim 1, **characterised in that** the clutching mechanism is controlled from the electronic box (23) in order to be deactivated when the speed of the rotor(s) of the breaking-shredding device (6) controlled by a sensor (29) varies in significant proportions, indicative of a bottleneck for instance.

6. A distributing machine according to any of claims 1 to 4, **characterised in that** it comprises directly, or via the tractor, means of information on its forward speed, which means, associated with the electronic box (23), enable to adjust in relation to that speed, to the speed of the conveyor belt (9) and/or to the weight variation of the products contained in the tipper, to the throughput of the machine and to adapt it to the requested throughput.

7. A distributing machine according to any of claims 1 to 6, **characterised in that** it comprises at least one position sensor (33) associated with the rear door (10) of the tipper, which sensor is connected to the electronic control box (23) to prevent the putting into service of the breaking-shredding device (6) and possibly of the conveying device (9) when said door (10) is open.

## Patentansprüche

1. Maschine zum Verteilen eines Futter- oder anderen Produktes zur Ernährung von Vieh, die einerseits eine Auswurfvorrichtung (4) und eine Auflöse-Zerstückelvorrichtung (6) umfasst, die mindestens aus einem Rotor besteht, der vor der Auswurfvorrichtung und am vorderen Ende eines Kübels angebracht ist, wobei der Kübelboden mit einer Fördervorrichtung (9) versehen ist, die dazu bestimmt ist, die Produkte zur Auflöse-Zerstückelvorrichtung (6) zu fördern, wobei die Auswurf- und die Auflöse-Zerstückelvor-richtung von einem mechanischen Getriebe (7) drehbar angetrieben werden, das an die Zapfwelle (3) eines Schleppers anschließbar ist, und, andererseits, aus einem Steuersystem mit einem Elektronikgehäuse (23), das zwischen einem Organ des Typs Griff (15) für den Bediener auf dem Schlepper und einem Gehäuse (20) angeordnet ist, das die verschiedenen Magnetventile enthält, die die Maschinenorgane versorgen, **dadurch gekennzeichnet, dass** sie einen Kupplungsmechanismus (26) zwischen dem mechanischen Getriebe (7) und der Auflöse-Zerstückelvorrichtung (6) umfasst, wobei der Kupplungsmechanismus (26) des elektromagnetischen Typs über das Elektroniksteuergehäuse (23) betrieben wird.

2. Maschine zum Verteilen nach Anspruch 1, **dadurch gekennzeichnet, dass** sie Mittel zur Verzögerung (28) umfasst, die mit dem Elektronikgehäuse (23) kombiniert sind und es erlauben, die Inbetriebnahme der Fördervorrichtung (9) in Bezug auf das Starten des Rotors oder der Rotoren der Auflöse-Zerstückelvorrichtung (6) und/oder dessen Stoppen in Bezug auf das Stoppen der Fördervorrichtung (9) um eine oder mehrere Sekunden zu verzögern.

3. Maschine zum Verteilen nach einem der Ansprüche 1 oder 2, **dadurch gekennzeichnet, dass** sie an der Auswurfvorrichtung (4) einen Fühler (27) umfasst, der dazu bestimmt ist, das Drehen der letzteren zu erkennen, wobei der Fühler an das Elektroniksteuergehäuse (23) angeschlossen ist und es erlaubt, die Inbetriebnahme der Auflöse-Zerstückelvorrichtung (8) je nach Zustand der Auswurfvorrichtung zu gestatten oder verbieten.

4. Maschine zum Verteilen nach einem der Ansprüche 1 bis 3, **dadurch gekennzeichnet, dass** sie Mittel zum Erfassen der Drehzahl der Auswurfvorrichtung (4) umfasst, bestehend aus dem Fühler (27), der an das Elektronikgehäuse (23) so angeschlossen ist, dass er es letzterem erlaubt, je nach den Veränderungen der Drehzahl und deren Ausmaß bis hin zum plötzlichen Stoppen auf der Grundlage eines gespeicherten Programms die Durchführung einer Änderung der Vorlaufgeschwindigkeit der Fördervorrichtung (9) zu steuern, um für die Auswurfvorrichtung eine geeignete Drehzahl und einen geeigneten Durchsatz zu bewahren.

5. Maschine zum Verteilen nach Anspruch 1, **dadurch gekennzeichnet, dass** der Kupplungsmechanismus über das Elektronikgehäuse (23) so gesteuert wird, dass er deaktiviert werden kann, wenn die Drehzahl des Rotors oder der Rotoren der Auflöse-Zerstückelvorrichtung (6), die von einem Fühler (29) erfasst wird, sich in großen Ausmaßen verändert, was zum Beispiel auf eine Pfropfenbildung hinweist.

6. Maschine zum Verteilen nach einem der Ansprüche 1 bis 5, **dadurch gekennzeichnet, dass** sie direkt oder über den Schlepper über Mittel zum Informieren über dessen Fahrgeschwindigkeit verfügt, welche Mittel, die mit dem Elektronikgehäuse (23) kombiniert sind, es erlauben, je nach dieser Fahrgeschwindigkeit, oder Geschwindigkeit des Förderbands (9) und/oder der Veränderung des Gewichts der im Kübel enthaltenen Produkte den Durchsatz der Maschine zu regeln und ihn an den gewünschten Durchsatz anzupassen.

7. Maschine zum Verteilen nach einem der Ansprüche 1 bis 6, **dadurch gekennzeichnet, dass** sie mindestens einen Positionsfühler (33) umfasst, der mit der Hintertür (10) des Kübels kombiniert ist, wobei der Fühler an das Elektroniksteuergehäuse (23) angeschlossen ist, um die Inbetriebnahme der Auflöse-Zerstückelvorrichtung (6) und eventuell der Fördervorrichtung (9) zu unterbinden, wenn die Hintertür (10) offen steht.
